# EUROPEAN PATENT APPLICATION

(11) **EP 4 574 557 A1**
(43) Date of publication of application: **25.06.2025**
(21) Application number: 23307363.4
(22) Date of filing: 22.12.2023
(51) Int. Cl.: B60N 2/015, B61D 33/00

(54) **SEAT SUPPORT FOR SUPPORTING A SEAT IN A VEHICLE**

(71) Applicant: SpeedInnov, 75008 Paris (FR)
(72) Inventor: MARTIN, David, 17220 SAINTE SOULLE (FR); BALLAIS, David, 17138 PUILBOREAU (FR); VENTRE, Alexandre, 17440 AYTRE (FR)
(74) Representative: Plasseraud IP

(57) **Abstract**

The seat support (10) has a leg (12) intended to be fixed on a rail (14) of a ground of the public transport vehicle, wherein the leg (12) has an X shape, comprising a central area (12a) with two lower branches (12b) intended to be fixed to said rail (14) and with two upper branches (14c) intended to be fixed to said seat.

## Description

The present invention relates to a seat support for supporting a seat in a vehicle, in particular in a public transport vehicle, such as a railway vehicle.

Usually, there is several kinds of seats in a public transport vehicle, in particular with different dimensions. More particularly, the dimensions of the seat can differ from a vehicle to another or, in a same vehicle, can differ from 1^{st} and 2^{nd} class.

Consequently, in prior art, several specific seat supports had to be developed to adapt to the different interfaces.

It should be noticed that a seat support has to respect several constraints, in particular:
- a low mass, in order to optimize the global mass of the seats;
- a sufficient stiffness, since the support has to withstand significant efforts;
- a resistance to acceleration, to resist to acceleration of its own mass and of the passenger mass,
- a resistance to fatigue, so that the seat support stays intact after 100 000 cycles (seat specific loads) and 10 million cycles (service accelerations);
- modularity constraints, so that the seat support could be adaptable to 1^{st} or 2^{nd} class seats and adaptable to the change in seat pitch;
- aesthetics constraints, since the seat support is a visible part, subject to kicks,
- industrial constraint, taking into account the tightening means during the design (electric tools with torque capture) and assembly order to be respected.

The invention is intended to propose a seat support able to respect said constraints.

To this end, the invention relates to a seat support for a seat of a public transport vehicle, having a leg intended to be fixed on a rail of a ground of the public transport vehicle, characterized in that the leg has an X shape, comprising a central area with two lower branches intended to be fixed to said rail and with two upper branches intended to be fixed to said seat.

A seat support according to the invention may also comprise at least one of the following features:
- The leg is made of aluminum.
- The seat support comprises a cover for covering said leg.
- The cover is made of thermoformed polycarbonate.
- Each branch has a U-shaped cross section.
- At least one of the branches has internal stiffening ribs.
- Each seat is supported by a seat support.
- The public transport vehicle comprises a room having two sidewalls, wherein the leg is arranged in proximity to one of the sidewalls.

Several features and advantages of the invention will be detailed hereafter, as non-limitative an example of embodiment, based on the following figure:

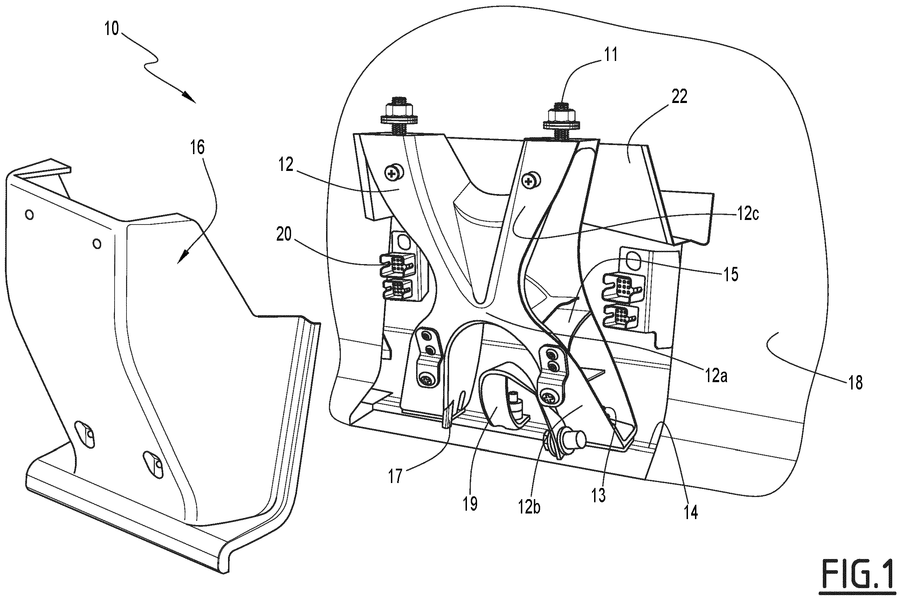

- Figure 1 is a perspective and an exploded view of a seat support according to an example of embodiment of the invention.

Figure 1 shows a seat support 10 for a seat of a public transport vehicle. The public transport vehicle is preferentially a railway vehicle, but it could be in a variant a road vehicle or an aircraft.

The seat support 10 comprises a leg 12 adapted to be fixed on a rail 14 arranged on a ground of the public transport vehicle.

According to the invention, the leg 12 has an X shape, comprising a central area 12a with two lower branches 12b extending downwards from the central area 12a, and two upper branches 12c extending upwards from the central area 12a.

The two upper branches 12c are intended to be fixed to said seat.

To this end, each upper branch 12c comprises a seat fixation member 11, for instance a bolt, intended to be fixed to the seat.

The lower branches 12b are intended to be fixed to said rail 14.

To this end, each lower branch 12b has a fixation member 13, for instance a bolt, intended to be fixed into the rail 14. It should be noticed that the fixation member can be fixed in any position on the rail 14. So, the position of the seat support 10, thus the seat position, along the rail 14, can easily be set, so the seat support 10 can be used in the 1^{st} or 2^{nd} class where the seat pitches are different.

Optionally, each lower branch 12b has lateral protrusions 17 intended to be arranged on either lateral sides of the rail 14, so that to ensure the good lateral positioning of the leg 12.

Preferentially, the leg 12 is made of aluminum. More particularly, the leg 12 is made of high pressure injected aluminum. The high-pressure injection (HPI) makes it possible to obtain 3mm thickness skin. This allows optimizing the mass.

The X shape is also intended to have material just in the necessary places to respect mechanical constraints.

In the example shown, each branch 12b, 12c has a U-shaped cross section.

Preferentially, at least one of the branches 12b, 12c has internal stiffening ribs 15. The stiffening ribs 15 are arranged in the space delimited in the U-shaped cross section.

The X shape allows the passage of wiring. More particularly, wires can be arranged to pass between the upper branches 12c and/or the lower branches 12b, from electrical connections 20 towards the seat.

As it is shown on Figure 1, the seat support 10 preferentially comprises a ground braid assembly 19, fixed on the rail 14.

The seat support 10 also preferentially comprises a cover 16 for covering said leg 12. The cover 16 is intended to hide the technical elements, including electrical connection, ground braid 19 and fixation members 13.

In a preferred embodiment, the cover 16 is made of thermoformed polycarbonate. This allows optimizing the global mass of the seat support 10.

Preferentially, the seat support 10 also comprises an upper cover 22 covering the leg 12 from upwards, whereas the cover 16 laterally covers the leg 12.

It should be noticed that, the public transport vehicle comprises a room having two sidewalls 18, and the leg 12 is arranged in proximity to one of the sidewalls 18.

The seat support 10 according to the invention respects the constraints imposed for a seat support.

The mechanical constraints are respected because of the X shape and because of the high pressure injection aluminum.

The mass is low, less than 2 kg.

The thermoformed cover 16 allows adapting shape to customer design, responding to the aesthetic constraint.

Moreover, the X shape of the leg permits having a good accessibility to the screws, in particular with an electrical tightening tool.

## Claims

1. A seat support (10) for a seat of a public transport vehicle, having a leg (12) intended to be fixed on a rail (14) of a ground of the public transport vehicle, **characterized in that** the leg (12) has an X shape, comprising a central area (12a) with two lower branches (12b) intended to be fixed to said rail (14) and with two upper branches (14c) intended to be fixed to said seat.

2. The seat support (10) according to claim 1, wherein the leg (12) is made of aluminum.

3. The seat support (10) according to claim 1 or 2, comprising a cover (16) for covering said leg (12).

4. The seat support (10) according to claim 3, wherein the cover (16) is made of thermoformed polycarbonate.

5. The seat support (10) according to any of the preceding claims, wherein each branch (12b, 12c) has a U-shaped cross section.

6. The seat support (10) according to claim 5, wherein at least one of the branches (12b, 12c) has internal stiffening ribs (15).

7. Public transport vehicle, comprising at least one seat, **characterized in that** each seat is supported by a seat support (10) according to any of preceding claims.

8. Public transport vehicle according to claim 7, comprising a room having two sidewalls (18), wherein the leg (12) is arranged in proximity to one of the sidewalls (18).
